# EUROPEAN PATENT APPLICATION

(11) **EP 4 481 248 A1**
(43) Date of publication of application: **25.12.2024**
(21) Application number: 24183364.9
(22) Date of filing: 20.06.2024
(51) Int. Cl.: F16K 27/12, F16K 24/06

(54) **PROTECTOR**

(30) Priority: 23.06.2023 GB 202309527
(71) Applicant: Intaco Limited, Hixon Staffordshire ST18 0PF (GB)
(72) Inventor: BLAIRS, Stuart, Hixon, ST18 0PF (GB)
(74) Representative: Swindell & Pearson Limited

(57) **Abstract**

1. A protector (10) for an anti-vacuum valve (12) of an anti-freeze valve (14), the protector (10) comprising:
a connection portion (16) configured to locate the protector (10) on the anti-freeze valve (14); and
a cover portion (18) configured to cover the anti-vacuum valve (12) of the anti-freeze valve (14) and to allow air flow from an external environment to the anti-vacuum valve (12) when the protector (10) is located on the anti-freeze valve (14), wherein the protector (10) is configured to cover the anti-vacuum valve (12) of the anti-freeze valve (14) on all open sides when the protector (10) is located on the anti-freeze valve (14).

## Description

### TECHNOLOGICAL FIELD

Embodiments of the present disclosure relate to a protector. Some relate to a protector for an anti-vacuum valve of an anti-freeze valve.

### BACKGROUND

Anti-freeze valves can be used to protect heating systems, such as heat pump systems, by discharging liquid in the system in case temperature of the liquid in the system drops to a predetermined level.

It would be desirable to protect anti-freeze valves to enable the anti-freeze valves to operate efficiently and effectively.

### BRIEF SUMMARY

According to various, but not necessarily all, embodiments there is provided a protector for an anti-vacuum valve of an anti-freeze valve, the protector comprising:
a connection portion configured to locate the protector on the anti-freeze valve; and
a cover portion configured to cover the anti-vacuum valve of the anti-freeze valve and to allow air flow from an external environment to the anti-vacuum valve when the protector is located on the anti-freeze valve, wherein the protector is configured to cover the anti-vacuum valve of the anti-freeze valve on all open sides when the protector is located on the anti-freeze valve.

In some examples, the protector comprises a first end and a second end, wherein the connection portion is located at the first end and the second end comprises an air inlet.

In some examples, the protector comprises a bend of 120 degrees to 270 degrees between the first end and second end.

In some examples, the protector comprises a U-bend between the first and second end.

In some examples, the second end of the protector is oriented in a substantially downward direction when the protector is located on the anti-freeze valve.

In some examples, the protector is tubular.

In some examples, the connection portion is configured to locate the protector on the anti-freeze valve using at least one of: an interference fit, at least one screw thread, and at least one indentation or protrusion.

According to various, but not necessarily all, embodiments there is provided a system comprising:
an anti-freeze valve comprising an anti-vacuum valve; and
a protector as described herein located on the anti-freeze valve to protect the anti-vacuum valve.

According to various, but not necessarily all, embodiments there is provided a heating system comprising:
an anti-freeze valve comprising an anti-vacuum valve; and
a protector as described herein located on the anti-freeze valve to protect the anti-vacuum valve.

In some examples, the heating system comprises at least one heat pump.

According to various, but not necessarily all, examples there is provided examples as claimed in the appended claims.

While the above examples of the disclosure and optional features are described separately, it is to be understood that their provision in all possible combinations and permutations is contained within the disclosure. It is to be understood that various examples of the disclosure can comprise any or all of the features described in respect of other examples of the disclosure, and vice versa. Also, it is to be appreciated that any one or more or all of the features, in any combination, may be implemented by/comprised in/performable by an apparatus, a method, and/or computer program instructions as desired, and as appropriate.

The description of a function should additionally be considered to also disclose any means suitable for performing that function.

### BRIEF DESCRIPTION

FIG. 1 shows an example of the subject matter described herein;
FIG. 2 shows another example of the subject matter described herein;
FIG. 3 shows another example of the subject matter described herein, and
FIG. 4 shows another example of the subject matter described herein.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Similar reference numerals are used in the figures to designate similar features. For clarity, all reference numerals are not necessarily displayed in all figures.

### DETAILED DESCRIPTION

Examples of the disclosure relate to a protector for an anti-vacuum valve of an anti-freeze valve. A protector for an anti-vacuum valve of an anti-freeze valve can be considered an anti-vacuum valve protector, and/or an anti-freeze valve protector.

The following description and FIGS describe various examples of a protector 10 for an anti-vacuum valve 12 of an anti-freeze valve 14, the protector 10 comprising:
a connection portion 16 configured to locate the protector 10 on the anti-freeze valve 14; and
a cover portion 18 configured to cover the anti-vacuum valve 12 of the anti-freeze valve 14 and to allow air flow from an external environment 20 to the anti-vacuum valve 12 when the protector 10 is located on the anti-freeze valve 14, wherein the protector 10 is configured to cover the anti-vacuum valve 12 of the anti-freeze valve 14 on all open sides when the protector 10 is located on the anti-freeze valve 14.

In examples, where a feature is described as "for performing an action" it should also be considered to be configured to perform the action and vice versa.

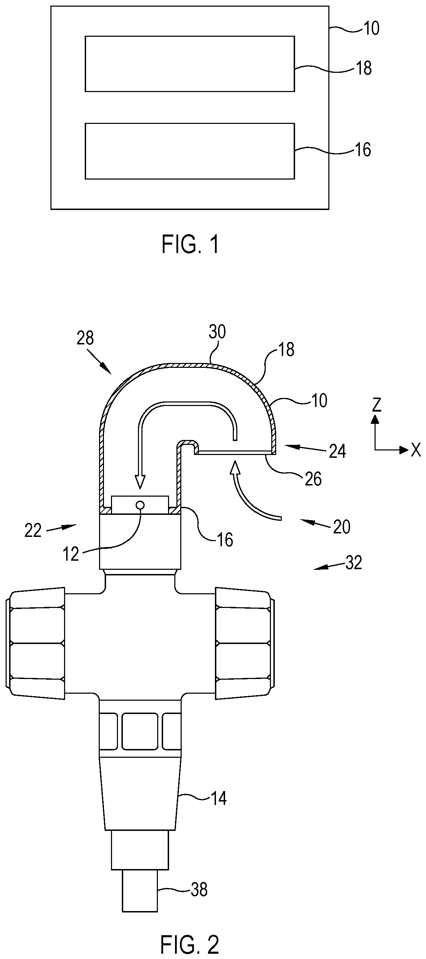

FIG. 1 schematically illustrates an example of a protector 10 for an anti-vacuum valve 12 of an anti-freeze valve 14.

In examples, the protector 10 can be considered a cowling, and/or a cover, and/or a casing and so on.

In examples, an anti-freeze valve can be considered a valve configured to allow liquid in a system to drain out of the system when the temperature of the liquid in the system goes below a predefined temperature. For example, an anti-freeze valve can be configured to allow water to drain from a heat pump system when the temperature of the water goes below 3°C.

In examples, an anti-vacuum valve can be considered a valve configured to allow air to flow into the system to prevent a vacuum from forming. For example, an anti-vacuum valve can be considered a valve configured to allow air to flow towards and/or into an anti-freeze valve to enable the anti-freeze valve to allow liquid in the system to drain out. In examples, an anti-vacuum valve can be considered a vacuum breaker, and/or a vacuum break and so on.

In the example of FIG 1, the protector 10 comprises a connection portion 16 and a cover portion 18.

The connection portion 16 is configured to locate the protector 10 on the anti-freeze valve 14.

The connection portion 16 can comprise any suitable portion of the protector 10. In some examples, the connection portion 16 comprises or is an end portion of the protector 10.

In examples, the connection portion 16 can be considered to be configured to connect the protector 10 to the anti-freeze valve 14, and/or to attach the protector 10 to the anti-freeze valve 14, and/or to position the protector 10 on the anti-freeze valve 14.

Accordingly, in examples, the connection portion 16 can be considered an attachment portion, and/or a connecting portion, and/or a positioning portion and so on.

Locating the protector 10 can be considered positioning the protector 10 on the anti-freeze valve 14 to enable the protector 10 to protect the anti-vacuum valve 12 of the anti-freeze valve 14.

Protecting the anti-vacuum valve 12 can be considered preventing blockage of the anti-vacuum valve 12.

The connection portion 16 can be configured to locate and hold the protector 10 on the anti-freeze valve 14. In examples, the connection portion 16 can be considered to be configured to secure the protector 10 on the anti-freeze valve 14.

The connection portion 16 can be configured to locate the protector 10 on the anti-freeze valve 14 in any suitable way using any suitable method. For example, the connection portion 16 can have any suitable size, and/or shape, and/or form to locate the protector 10 on the anti-freeze valve 14.

In some examples, the connection portion 16 is configured to locate the protector 10 on the anti-freeze valve 14 using at least one of: an interference fit, at least one screw thread, and at least one indentation or protrusion.

In examples, the anti-freeze valve 12 can have at least one corresponding feature to allow the connection portion 16 to locate the protector 10 on the anti-freeze valve 14. For example, the anti-freeze valve 14 can comprise a corresponding screw thread and/or indentation and/or protrusion to locate the protector 10 on the anti-freeze valve 14.

The cover portion 18 is configured to cover the anti-vacuum valve 12 of the anti-freeze valve 14 and to allow airflow from an external environment 20 to the anti-vacuum valve 12 when the protector 10 is located on the anti-freeze valve 14.

In examples, an external environment 20 can be considered the environment around the protector 10 and anti-freeze valve 14 when a protector 10 is located on the anti-freeze valve 14.

In examples, the cover portion 10 is configured to cover the anti-vacuum valve 12 of the anti-freeze valve 14 on all open sides when the protector 10 is located on the anti-freeze valve 14.

In some examples, it can be considered that the protector 10 is configured to cover the anti-vacuum valve 14 on all open sides when the protector 10 is located on the anti-freeze valve 14.

In examples, the cover portion 18 can comprise any suitable portion of the protector 10. In some examples, the connection portion 16 and the cover portion 18 can comprise overlapping portions.

In some examples the portion of the protector 10 in contact with the anti-freeze valve 14 when the protector 10 is located on the anti-freeze valve 14 can be considered the connection portion 16, and the remaining part of the protector 10 can be considered the cover portion 18.

The cover portion can be considered to be configured to encase, and/or enclose, and/or shroud the anti-vacuum valve 12 of the anti-freeze valve 14 while still allowing airflow from an external environment 20 to the anti-vacuum valve 12 when the protector 10 is located on the anti-freeze valve 14.

As previously discussed, the cover portion 18 is configured to cover the anti-vacuum valve 12 of the anti-freeze valve 14 on all open sides when the protector 10 is located on the anti-freeze valve 14.

Consequently, FIG 1 illustrates a protector 10 for an anti-vacuum valve 12 of an anti-freeze valve 14, the protector 10 comprising:
A connection portion 16 configured to locate the protector 10 on the anti-freeze valve 14; and
a cover portion 18 configured to cover the anti-vacuum valve 12 of the anti-freeze valve 14 and to allow air flow from an external environment 20 to the anti-vacuum valve 12 when the protector 10 is located on the anti-freeze valve 14.

In examples, an open side of the anti-vacuum valve 12 can be considered a side, and/or position, and/or an angle from which the view of the anti-vacuum valve 12 is unobstructed. Accordingly, in examples, the anti-vacuum valve 12 is not visible from any side, and/or position, and/or viewing angle when the protector 10 is located on the anti-freeze valve 14.

The protector 10 is configured to protect, and/or cover, and/or encase, and/or enclose the anti-vacuum valve 12 of the anti-freeze valve 14 from water, debris, leaves, and/or moss and so on to avoid blockage of the anti-vacuum valve 12 without the protector 10 blocking the anti-vacuum valve 12 and therefore ensuring air can flow to the anti-vacuum valve 12.

It can be considered that the protector 10 is configured to ensure that the anti-vacuum valve 12 remains clear to maintain proper operation of the anti-vacuum valve 12 and anti-freeze valve 14.

In examples, when the protector 10 is located on the anti-freeze valve 14, and is therefore covering the anti-vacuum valve 12, there is a gap between the protector 10 and the anti-vacuum valve 12 to allow the protector 10 to cover the anti-vacuum valve 12 but still allow air to flow to the anti-vacuum valve 12 so that operation of the anti-vacuum valve 12, and therefore the anti-freeze valve 14, is not impeded.

By way of example, reference is made to the example of FIG. 2.

FIG. 2 illustrates an example of a protector 10 for an anti-vacuum valve 12 of an anti-freeze valve 14 located on an anti-freeze valve 14 so that the protector 10 covers the anti-vacuum valve 12 of the anti-freeze valve 14 on all open sides.

In examples, it can be considered that the protector 10 is located on the anti-vacuum valve 12 of the anti-freeze valve 14.

In the illustrated example, the ant-freeze valve 14 comprises a discharge nipple 38.

In FIG. 2, although the protector 10 covers the anti-vacuum valve 12 on all open sides, for the purposes of illustration, the anti-vacuum valve 12 is still shown in the example of FIG. 2.

Accordingly, in normal use, such as the example shown in FIG. 2, the anti-vacuum valve 12 would not be visible when the protector 10 is located on the anti-freeze valve 14.

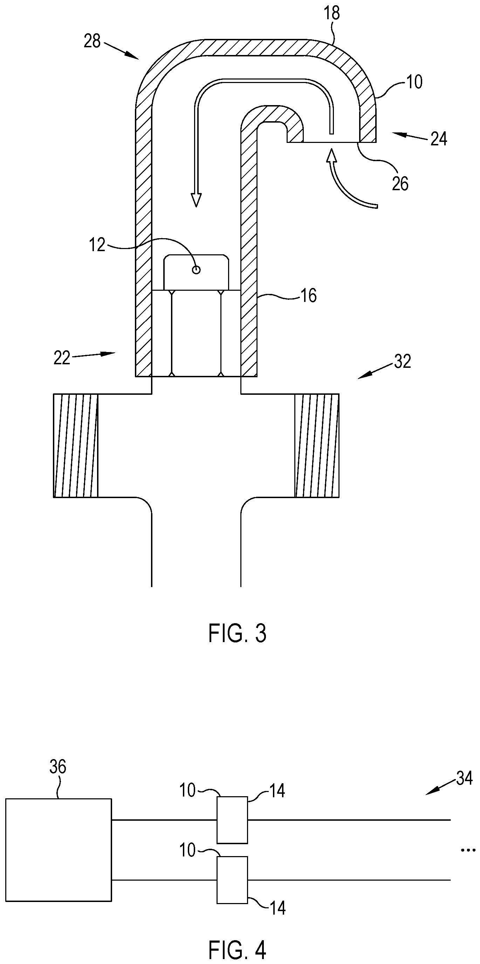

See, for example, the example of FIG. 3.

The example of fig 3 is similar to the example of FIG. 2, however, in the example of FIG. 3 a cross section of the protector 10 is shown.

It can be seen in the example of FIG. 3 that the protector 10, when located on the anti-freeze valve 14, covers the anti-vacuum valve 12 of the anti-freeze valve 14 on all open sides but still allows air flow to the anti-vacuum valve 12.

Returning to the example of FIG. 1, in examples, the cover portion 18 can have any suitable size, and/or shape, and/or form. For example, the cover portion 18 can have any suitable size, and or shape, and/or form to allow the protector 10 to cover the anti-vacuum valve 12 of the anti-freeze valve 14 on all open sides and to allow air flow from an external environment 20 to the anti-vacuum valve 12 when the protector 10 is located on the anti-freeze valve 14.

In examples, the cover portion 18 can have any suitable size, and/or shape, and/or form to prevent anything that might clog and/or block the anti-vacuum valve 12, for example, debris, and/or water, from reaching the anti-vacuum valve 12 while still allowing air flow from an external environment 20 to the anti-vacuum vale 12.

In some examples, the protector 10 comprises a first end 22 and a second end 24, wherein the connection portion 16 is located at the first end 22 and the second end comprises an air inlet 26.

In examples, it can be considered that the first end 22 is configured to connect the protector 10 to the anti-freeze valve 14, and/or to locate/position the protector 10 on the anti-freeze valve 14 to cover the anti-vacuum valve 12.

In examples, it can be considered that the second end 24 is configured to allow air flow from an external environment 20 into the protector 10 towards the anti-vacuum valve 12.

In examples, the cover portion 18 comprises the second end 24 and the portion of the protector between the connection portion 16 and the second end 24.

An air inlet 26 can be considered any suitable feature(s) configured to allow air to flow from an external environment 20 into a protector 10. For example, the air inlet 26 can be considered at least one hole and so on.

In examples, the second end 24 of the protector 10 is open and the air inlet 26 can be considered to comprise the open end of the protector 10.

The air inlet 26 can have any suitable shape, size and/or form.

Reference is again made to the example of FIG 2. In the example of FIG 2, it can be seen that the first end 22 of the protector 10 comprises the connection portion 16 and the second end 24 of the protector 10 comprises the air inlet 26.

In the illustrated example, the first end comprising the connection portion 16 is configured to locate the protector 10 on the anti-freeze valve 14 using an interference fit.

In the illustrated example, the second end 24 of the protector 10 is open and the air inlet 26 comprises the open end of the protector 10.

As illustrated by the thick arrows in the example of FIG 2, air can flow from the external environment 20 through the air inlet 26 and the second end 24 of the protector 10 towards the anti-vacuum valve 12.

As can be seen in the example of FIG 2, the cover portion 18 of the protector 10 is configured to prevent blockage of the anti-vacuum valve 12 while still allowing air to flow to the anti-vacuum valve 12.

As previously discussed, the protector 10 can have any suitable shape, size, and/or form. For example, the protector 10 can have an inside diameter of 21 mm to 23 mm, an outside diameter of approximately 24 mm to 26 mm, a height or height to top of 48 mm to 52 mm and projection from the centre of 39 mm to 41 mm.

Returning to the example of FIG 1, in examples, the protector 10 comprises a bend of 120° to 270° between the first end 22 and the second end 24.

In examples, it can be considered that the cover portion 18 comprises a bend of 120° to 270°.

In some examples, the protector 10 comprises a U-bend 30 between the first and second ends 22, 24.

In examples, it can be considered that the cover portion 18 comprises a U-bend 30.

In the example of FIG. 2, the protector 10 comprises a U-bend 30 between the first end 22 and the second end 24.

As can be seen in the example of FIG. 2, the U-bend 30 enables the protector 10 to cover/protect the anti-vacuum valve 12 from blockage caused by, for example, debris, and/or water, while allowing airflow towards the anti-vacuum valve 12.

As discussed, the protector 10/cover portion 18 can comprise a bend of 120° to 270° between the first end 22 and the second end 24.

Accordingly, in examples the second end 24 of the protector 10 is oriented in a substantially downward direction when the protector 10 is located on the anti-freeze valve 14.

For example, in the example of FIG. 2, where the protector 10/cover portion 18 comprises a u-bend 30, the second end 24 comprising the air inlet 26 is oriented in a substantially downward direction when the protector 10 is located on the anti-freeze valve 14.

In the example of FIG 2, an axis is also shown. In the illustrated example, upwards can be considered to be in the positive Z direction and therefore it can be considered that the second end 24 of the protector 10 is located in a substantially negative Z direction when the protector 10 is located on the anti-freeze valve 14.

Returning again to the example of FIG 1, in examples, the protector 10 is tubular. In examples, the protector 10 can be tubular and have any suitable cross-section.

For example, the protector 10 can be tubular and have a circular, hexagonal, square, pentagonal, rectangular or triangular cross-section and so on.

In some examples, the protector 10 can have any suitable cross-section that enables the protector 10 to be securely located on the anti-freeze valve 14 via the connection portion 16.

In examples, the protector 10 can be tubular and the cross-section of a protector 10 can vary in form along the protector 10, for example, from the first end 22 to the second end 24.

In the example of FIG. 2, the protector 10 has a circular cross section and therefore the protector 10 is substantially cylindrical in nature.

The protector 10 can be made from any suitable material(s) and/or produced in any suitable way. For example, the protector 10 can be injection molded and made from plastic. For example, the protector 10 can be machined from brass or formed from another alloy and so on.

In the example of FIG 2, the protector 10 is located on the anti-freeze valve 14 and protects/covers the anti-vacuum valve 12.

Accordingly, FIG 2 illustrates an example of a system 32 comprising:
An anti-freeze valve 14 comprising an anti-vacuum valve 12; and
a protector 10 as described herein located on the anti-freeze valve 14 to protect the anti-vacuum valve 12.

FIG. 3 also illustrates such a system 32. However, in the example of FIG. 3, the protector 10 is shown in cross section to aid understanding.

In examples, the protector 10 can be used on any suitable anti-freeze valve 14. For example, the protector 10 can be used on an anti-freeze valve in a heating system 24.

FIG. 4 schematically illustrates an example of a heating system 34.

In the example of FIG. 4, the heating system 34 comprises a plurality of anti-freeze valves 14 comprising anti-vacuum valves 12.

In the illustrated example, the anti-freeze valves 14 have protectors 10 located on them.

Accordingly, FIG 4 illustrates the example of a heating system 34 comprising:
An anti-freeze valve 14 comprising an anti-vacuum valve 12;
A protector 10 as described herein located on the anti-freeze valve 14 to protect the anti-vacuum valve 12.

In some examples, the heating system 34 comprises at least one heat pump 36.

In examples, use of a protector 10 as described herein can allow a heating system 34, for example, comprising a heat pump 36, to comprise anti-freeze valves 14 installed one above the other which otherwise would not be possible as water discharged from an upper anti-freeze valve 14 could cause clogging of the anti-vacuum valve 12 of the lower anti-freeze valve 14.

Accordingly, in examples, the heating system 34 comprises a plurality of anti-freeze valves 14 comprising protectors 10 located on the anti-vacuum valves 12 of the anti-freeze valves 14, wherein the anti-freeze valves 14 are installed one above the other.

Examples of the disclosure are advantageous and/or provide technical benefits.

For example, the protector described herein ensures that an anti-vacuum valve of an anti-freeze valve does not become blocked, ensuring proper operation of the valves and preventing damage to a heating system comprising the valves.

For example, the protector described herein enables anti-freeze valves 14 of a heating system, such as a heat pump system, to be installed one above the other and therefore enabling, for example, installation of the heating system where otherwise installation would have been difficult or not possible.

In examples, the various features described are operationally coupled/connected and any number of intervening elements can exist (including no intervening elements).

Where a structural feature has been described, it may be replaced by means for performing one or more of the functions of the structural feature whether that function or those functions are explicitly or implicitly described.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one..." or by using "consisting".

In this description, the wording 'connect', 'couple' and 'communication' and their derivatives mean operationally connected/coupled/in communication. It should be appreciated that any number or combination of intervening components can exist (including no intervening components), i.e., so as to provide direct or indirect connection/coupling/communication. Any such intervening components can include hardware and/or software components.

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain examples, those features may also be present in other examples whether described or not.

The term 'a', 'an' or `the' is used in this document with an inclusive not an exclusive meaning. That is any reference to X comprising a/an/the Y indicates that X may comprise only one Y or may comprise more than one Y unless the context clearly indicates the contrary. If it is intended to use 'a', 'an' or `the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

## Claims

1. A protector for an anti-vacuum valve of an anti-freeze valve, the protector comprising:
a connection portion configured to locate the protector on the anti-freeze valve; and
a cover portion configured to cover the anti-vacuum valve of the anti-freeze valve and to allow air flow from an external environment to the anti-vacuum valve when the protector is located on the anti-freeze valve, wherein the protector is configured to cover the anti-vacuum valve of the anti-freeze valve on all open sides when the protector is located on the anti-freeze valve.

2. A protector as claimed in claim 1, wherein the protector comprises a first end and a second end, wherein the connection portion is located at the first end and the second end comprises an air inlet.

3. A protector as claimed in claim 2, wherein the protector comprises a bend of 120 degrees to 270 degrees between the first end and second end.

4. A protector as claimed in claim 3, wherein the protector comprises a U-bend between the first and second end.

5. A protector as claimed in any of claims 2 to 4, wherein the second end of the protector is oriented in a substantially downward direction when the protector is located on the anti-freeze valve.

6. A protector as claimed in any preceding claim, wherein the protector is tubular.

7. A protector as claimed in any preceding claim, wherein the connection portion is configured to locate the protector on the anti-freeze valve using at least one of: an interference fit, at least one screw thread, and at least one indentation or protrusion.

8. A system comprising:
an anti-freeze valve comprising an anti-vacuum valve; and
a protector as claimed in at least one of claims 1 to 7 located on the anti-freeze valve to protect the anti-vacuum valve.

9. A heating system comprising:
an anti-freeze valve comprising an anti-vacuum valve; and
a protector as claimed in at least one of claims 1 to 7 located on the anti-freeze valve to protect the anti-vacuum valve.

10. A heating system as claimed in claim 9, wherein the heating system comprises at least one heat pump.
